(19) Europäisches Patentamt European Patent Office Office européen des brevets

(11) **EP 4 428 767 A1**

(12) **EUROPEAN PATENT APPLICATION**

(43) Date of publication:
**11.09.2024 Bulletin 2024/37**

(21) Application number: **23305298.4**

(22) Date of filing: **06.03.2023**

(51) International Patent Classification (IPC):
**G06N 10/40** (2022.01)　　**G06N 10/70** (2022.01)

(52) Cooperative Patent Classification (CPC):
**G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Alice & Bob**
**75015 Paris (FR)**

(72) Inventors:
• **COTTET, Nathanaël**
**75015 Paris (FR)**
• **JEZOUIN, Sébastien**
**75015 Paris (FR)**
• **LESCANNE, Raphaël**
**75015 Paris (FR)**
• **TOUZARD, Steven**
**75012 Paris (FR)**

(74) Representative: **Cabinet Netter**
**36, avenue Hoche**
**75008 Paris (FR)**

Remarks:
A request for correction has been filed pursuant to Rule 139 EPC. A decision on the request will be taken during the proceedings before the Examining Division (Guidelines for Examination in the EPO, A-V, 3.).

(54) **QUANTUM SYSTEM FOR PERFORMING A CNOT GATE AND QUANTUM SYSTEM FOR PERFORMING A REPETITION CODE USING THE SAME**

(57) A quantum system for performing a CNOT gate, comprising a command circuit for providing radiation, a target cat qubit device and a control qubit device, coupled linearly, the target cat qubit comprises a non-linear element that is ATS which serves two purposes : engineering the 2-photon conversion Hamiltonian for cat qubit stabilization and engineering the CNOT Hamiltonian for performing a CNOT gate with the control qubit device. At any point in time, the ATS serves either the role of cat qubit stabilization or the role of CNOT gate.

Fig.3

**EP 4 428 767 A1**

**Description**

The invention concerns a system for performing a quantum gate, and more specifically the use of such gates in the context of cat qubits.

To extract the joint information of several data qubits, conventional quantum circuits perform a sequence of two-qubit gates (typically CNOT or CZ gate) between an ancilla qubit and the several data qubits before measuring the ancilla qubit. This operation is usually referred as syndrome measurement.

The realization of these quantum gates is crucial to detect errors and thus perform quantum error correction codes (or "QECC"), which is currently considered as the only way to build a reliable and usable quantum processor. The general idea behind QECC is to use several (at least two) physical data qubits to encode a logical qubit, an error detection scheme being put in place to verify that the several physical data qubits information does not change over time. If an error is detected, error correction is performed, whether by changing the physical data qubit states themselves or by post treatment of the result of the quantum algorithm involving these qubits.

The characteristics which are used to assess the quality of a quantum gate are its execution time (that is the time for the gate to operate) and the associated error probability. For cat qubits, this error probability depends on the ratio $\kappa_1/\kappa_2$ where $\kappa_1$ is the single photon loss rate (the error rate) of the qubits used to perform the gate, and $\kappa_2$ is the two-photon loss rate (the correction or stabilization rate) of the qubits used to perform the gate.

One of the goals pursued in current quantum hardware experiments is to achieve quantum gates which allow a repetition code to become more effective as the distance of the error correction code (which relates to the number of physical qubits used to encode a logical qubit) used to perform the error correction scheme grows. Currently, a ratio $\kappa_1/\kappa_2$ below $5 * 10^{-3}$ is needed. In past references, the proposed CNOT dynamics for cat qubit QECC relied on defining a control qubit being characterized by its annihilation operator $q$ and its resonance frequency $f_q$, defining a target qubit that consists of a cat qubit stabilized by two-photon drive and dissipation, the target qubit being characterized by its annihilation operator $a$ and a resonance frequency $f_a$, engineering the target qubit stabilization such that its phase is conditioned on the state of the control qubit, and engineering a longitudinal coupling Hamiltonian between the control qubit and the target cat qubit with this Hamiltonian being of the general formula $H_{CX}/\hbar = g_{CX}(q + q^\dagger)(a^\dagger a - \alpha^2)$ where $\alpha$ is a complex number defining the amplitude target cat qubit.

In the following, the expressions "longitudinal Hamiltonian", "longitudinal coupling" or CNOT or CX Hamiltonian are interchangeable and designate this longitudinal coupling Hamiltonian between the control qubit and the target cat qubit.

This general proposal raises two fundamental problems. The first problem is that there are few experimental implementations proposed. The second problem is that the few experimental implementations which have indeed been proposed are deemed impractical as they require too many non-linear components and/or too many parametric drives and/or fail to address all the engineering challenges. These experimental proposals include the article by Guillaud et al. "Repetition Cat Qubits for Fault-Tolerant Quantum Computation", Phys. Rev. X 9, 041053, https://doi.org/10.1103/PhysRevX.9.041053, the article by Chamberland et al. "Building a Fault-Tolerant Quantum Computer Using Concatenated Cat Codes", PRX Quantum 3, 010329, https://doi.org/10.1103/PRXQuantum.3.010329, and the article by Gautier et al. "Combined Dissipative and Hamiltonian Confinement of Cat Qubits", PRX Quantum 3, 020339, https ://doi. org/10.1103/PRXQuantum. 3.0203 3 9.

The invention aims at improving the situation. To this end, the Applicant proposes a quantum system for performing a CNOT gate comprising:

- a command circuit for providing microwave radiation,
- a target cat qubit device comprising an asymmetrically threaded superconducting quantum interference device having flux lines through which radiation can be sent to modulate a common flux and/or a differential flux, and connected to at least one resonant portion, said target cat qubit device having a first mode with a first resonant frequency and a second mode with a second resonant frequency, and said asymmetrically threaded superconducting quantum interference device being arranged such that when said command circuit delivers a radiation having said second resonant frequency to said a least one resonant portion to drive said second mode and delivers radiation in said flux lines to modulate said common flux at a frequency equal to the absolute value of the difference between twice the first resonant frequency and the second resonant frequency, the target cat qubit device stabilizes a target cat qubit having said first resonant frequency, and
- a control superconducting qubit device having a third mode with a third resonant frequency for hosting a control qubit arranged such that a Rabi oscillation of the third mode is induced when it is subject to a radiation having said third resonant frequency with a strength which is less than the control qubit confinement rate, said control superconducting qubit device being linearly coupled to said target cat qubit device such that said third mode is linearly coupled with said asymmetrically threaded superconducting quantum interference device. The command circuit is arranged during a CNOT gate time window to deliver in said flux lines only a radiation at a frequency equal to the third resonant frequency to operate a CNOT gate between said target cat qubit and said control qubit, and arranged outside of said CNOT gate time window to deliver a radiation having said second resonant frequency to said a least one resonant portion to drive said second mode and to deliver radiation in said flux lines to modulate said common flux at a frequency equal to the absolute value of the difference between twice the first resonant frequency and the second resonant frequency.

This system is advantageous because it makes minimal choices from the general proposal ingredient list and proposes a practical implementation with the least amount of hardware and control drives or parametric pumps. This reduces the implementation complexity and hence potential failure points. This system also tackles the impact of some non-idealities coming from practical implementation.

In various embodiments, the method may present one or more of the following features:

- said target cat qubit device and said control superconducting device are linearly coupled in such a way that the phase difference across said asymmetrically threaded superconducting quantum interference device writes $\varphi = \varphi_a(a + a^\dagger) + \varphi_b(b + b^\dagger) + \varphi_q(q + q^\dagger)$ with $a$ being the photon annihilation operator of said first mode, $\varphi_a$ being the zero-point fluctuation of the phase of said first mode across said asymmetrically threaded superconducting quantum interference device, $b$ being the photon annihilation operator of said second mode, $\varphi_b$ being the zero-point fluctuation of the phase of said second mode across said asymmetrically threaded superconducting quantum interference device, $q$ being the photon annihilation operator of said third mode, $\varphi_q$ being the zero-point fluctuation of the phase of said third mode across said asymmetrically threaded superconducting quantum interference device, and $\varphi_q \leq \varphi_a/2$,

- said command circuit is arranged to pump said flux lines with only a radiation at a frequency equal to the third resonant frequency during a CNOT gate time window with an amplitude $\varepsilon_{CX}$, which induces a Hamiltonian having the formula $H_{ATS} = H_{CX} - E_J \epsilon_{CX} \varphi_q (q + q^\dagger)(1 - \varphi_a^2 \alpha^2) + E_J \epsilon_{CX} \dfrac{\varphi_q^3}{2}(q^{\dagger 2} q + q^\dagger q^2)$ where $H_{CX}$ is a CNOT Hamiltonian with the formula $H_{CX} = \hbar g_{CX}(q + q^\dagger)(a^\dagger a - \alpha^2)$ and $g_{CX} = E_J \epsilon_{CX} \varphi_q \varphi_a^2 / \hbar$, $a$ is the photon annihilation operator of said first mode, $\varphi_a$ is the zero-point fluctuation of the phase of said first mode across said asymmetrically threaded superconducting quantum interference device, $q$ is the photon annihilation operator of said third mode, $\varphi_q$ is the zero-point fluctuation of the phase of said third mode across said asymmetrically threaded superconducting quantum interference device, $E_J$ is the Josephson energy of the side junctions of the asymmetrically threaded superconducting quantum interference device, and $\alpha^2$ is the photon number of said first mode, said command circuit being further arranged to induce a compensation Hamiltonian having the formula

$$H_{Cmp} = E_J \epsilon_{CX} \varphi_q (q + q^\dagger)(1 - \varphi_a^2 \alpha^2)$$ during said CNOT gate time window,

- said command circuit is arranged to induce a compensation Hamiltonian having the formula

$$H_{Cmp} = E_J \epsilon_{CX} \varphi_q (q + q^\dagger)(1 - \varphi_a^2 \alpha^2)$$ during said CNOT gate time window by delivering in said flux lines only a radiation at a frequency equal to the third resonant frequency to modulate said differential flux $\varphi_\Delta$ substantially

having the formula $$\varphi_\Delta(t) = \dfrac{2E_J}{E_L} \varphi_\Sigma(t)(1 - \varphi_a^2 \alpha^2)$$ where $\varphi_\Sigma$ is the common flux and $E_L$ is the inductive energy of the central inductance of the asymmetrically threaded superconducting quantum interference device,

- said command circuit is arranged to induce a compensation Hamiltonian having the formula

$$H_{Cmp} = E_J \epsilon_{CX} \varphi_q (q + q^\dagger)(1 - \varphi_a^2 \alpha^2)$$ during said CNOT gate time window by delivering radiation at a frequency equal to the third resonant frequency to said control qubit device,

- said control superconducting qubit device hosts a transmon qubit, a flux-qubit, a fluxonium qubit, a cat qubit or any bosonic qubit encoded in a resonator,

- said asymmetrically threaded superconducting quantum interference device is further arranged such that when said command circuit delivers a radiation having said second resonant frequency to drive said second mode and delivers radiation in said flux lines to modulate said common flux at frequencies equal to the absolute value of the difference between twice the first resonant frequency and the second resonant frequency, the second resonant frequency and the sum of twice the first resonant frequency and the second resonant frequency, the target cat qubit device stabilizes a target squeezed cat qubit having said first resonant frequency,

- said target cat qubit device and said control superconducting qubit device are arranged such that the absolute difference between said first resonant frequency and said third resonant frequency exceeds 10MHz,
- said command circuit is arranged to deliver radiation in said flux lines to modulate said common flux with only a radiation at a frequency equal to the third resonant frequency to induce a CNOT Hamiltonian with a constant strength $g_{CX}$, and
- said command circuit is arranged to deliver radiation in said flux lines to modulate said common flux with only a radiation at a frequency equal to the third resonant frequency to induce a CNOT Hamiltonian with a time dependent strength $g_{CX}(t)$ such that $\int 4\alpha g_{CX}(t)dt = \pi$.

The invention also concerns a quantum system for performing a repetition code comprising a command circuit for selectively applying microwave radiation, a number d of data cat qubit devices, with d equal to or greater than two, each data cat qubit device having a respective resonance frequency and being coupled to said command circuit for stabilizing a respective data cat qubit, and a number d-1 of ancilla qubit devices, each ancilla qubit device having an ancilla resonance frequency coupled to said command circuit for hosting an ancilla qubit, each of said d-1 ancilla qubit devices being linearly coupled to two respective data cat qubit devices of said d data cat qubit devices, and each data cat qubit device of said d data cat qubit device being connected at most to two ancilla qubit devices of said d-1 ancilla qubit devices, said d data cat qubit devices and said d-1 ancilla qubit devices being such that each coupling of a data cat qubit device with an ancilla qubit device can be controlled by said command circuit to realize a quantum system according to one of the preceding claims, said command circuit being further arranged to perform d-1 quantum operations by:

1) for each ancilla qubit device of said d-1 ancilla qubit devices, preparing an ancilla qubit in said each of said ancilla qubit device of said d-1 ancilla qubit devices with a state "1+>" or "|->" of the X operator,
2) for each ancilla qubit device of said d-1 ancilla qubit devices, performing a CNOT gate with a first one of the two data cat qubit devices to which it is coupled, and thereafter performing a CNOT gate with the second of the two data cat qubit devices to which it is coupled,
3) applying a measurement on operator X on said each ancilla qubit device.

In this quantum system all ancilla qubit devices host cat qubits such that all data cat qubit devices and all ancilla qubit devices are cat qubit devices, and wherein said command circuit defines which cat qubit device is a data cat qubit device and which cat qubit device is an ancilla qubit device.

Other features and advantages of the invention will readily appear in the following description of the drawings, which show exemplary embodiments of the invention and on which:

- Figure 1 shows a diagram of a quantum circuit for implementing a phase-flip repetition code,
- Figure 2 shows a generic diagram of a conventional CNOT gate between a control qubit and a target cat qubit,
- Figure 3 shows a generic diagram of a quantum system for performing a CNOT gate according to the invention,
- Figures 4 to 7 show various embodiments of target cat qubit device, control qubit device and linear coupling between the control qubit device and the target cat qubit device of figure 3,
- Figure 8 shows a diagram explaining how the quantum gate of figure 3 is executed,
- Figure 9 shows two longitudinal coupling establishment schemes for an operation of figure 8,
- Figure 10 shows a generic diagram of a quantum system for performing a repetition code comprising a CNOT gate according to the invention,
- Figure 11 shows a circuit diagram of a repetition code according to the invention,
- Figure 12 shows a photograph of an experimental quantum circuit using the CNOT gate according to the invention, and
- Figure 13 shows a close-up of a portion of figure 12,
- Figure 14 shows a photograph of an experimental quantum circuit implementing the CNOT gate, and
- Figure 15 shows a close-up of a portion of figure 14,

The drawings and the following description are comprised for the most part of positive and well-defined features. As a result, they are not only useful in understanding the invention, but they can also be used to contribute to its definition, should the need arise.

The invention concerns the realization of high-performance quantum gates in the context of cat qubits.

Stabilized cat qubits are known to benefit from a noise bias. More precisely, an effective error channel (e.g., bit errors or "bit-flips") is suppressed in an exponential way with the "size" - i.e. the average number of photons - of the Schrödinger cat states of the cat qubits.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

Because of this noise structure, it is considered that the use of a single repetition code is sufficient to correct the remaining error channel. Indeed, if one wishes to correct only the phase flip, it is sufficient to just use a phase flip error correction code. This can be, for example a repetition code defined in the dual base, or any other state-of-the-art error correction code.

In the following, the state and Pauli operators basis conventions are such that a drive at the resonance frequency of a qubit (or cat qubit), also known as a Rabi drive, corresponds to a Z rotation. This is a common choice of basis in the cat qubit field, but it is unusual for more standard two-level system qubits. In the following, this choice is made so that cat qubits and two-level system qubits have the same general notation. In particular, in the following, states $|+\rangle$ and $|-\rangle$ respectively correspond to ground and excited states of two-level system qubits. For cat qubit, $|+\rangle$ and $|-\rangle$ states represent the even and odd Schrödinger cat states $\propto |\alpha\rangle \pm |-\alpha\rangle$ where state $|\alpha\rangle$ is a coherent state with complex amplitude $\alpha$.

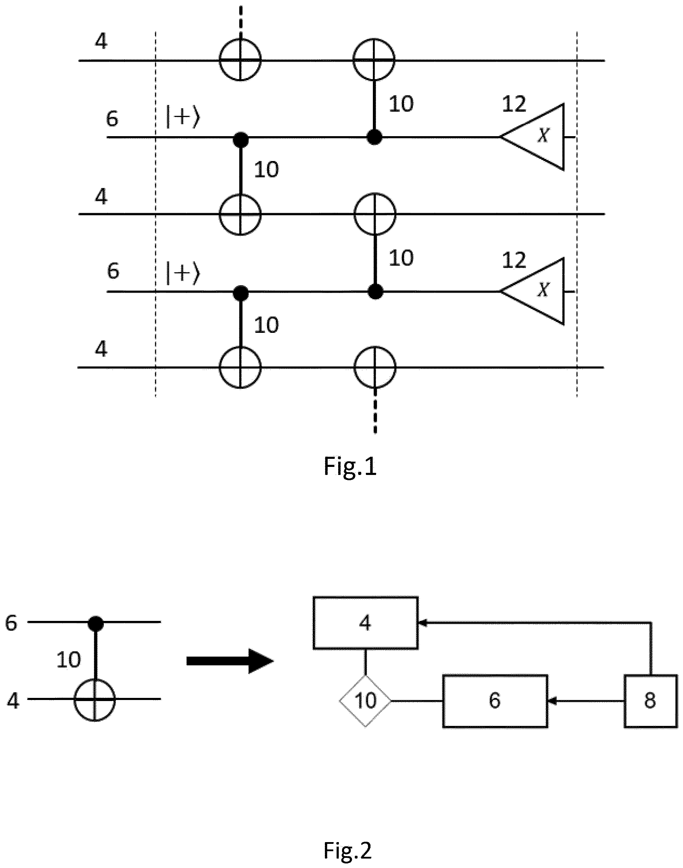

Figure 1 represents a diagram of a quantum circuit for performing a phase-flip repetition code. A cat qubit repetition code is made using d cat qubits 4 (called data cat qubits), in which logical information is encoded. The code is run by repeatedly measuring quantum operators which reveal if some errors have occurred on the data cat qubits. This is done by using $d - 1$ additional qubits 6 (called ancilla qubits or ancillary qubits). The quantum circuitry of the repetition code requires preparation of the ancilla qubit in either the state $|+\rangle$ or the state $|-\rangle$, two CNOT gates between the ancilla qubits and the data cat qubits 10, and measurement of the Pauli X operator 12 (which is equivalent to the photon or excitation number parity, a definition that is valid for both cat qubits and two-level system qubits, for two-level system qubits, this also corresponds to a measurement in the standard basis ground/excited state). In the following the ancilla qubits are also called control qubits and the data cat qubits are also called target cat qubits depending on if the context is the repetition code (ancilla/data) or if the context is a single CNOT gate (control/target).

The challenge in implementing this repetition code is to run the code on hardware which operates below a fault-tolerant error threshold. This means that the fidelity of the quantum operations in this circuit must be very high for the code to have a positive impact.

More precisely, when the repetition code is operated above the threshold, i.e., when the fidelity of the physical operations composing the repetition code is insufficient, the lifetime of the logical information decreases when the number of physical data qubits d increases: the new errors introduced by the addition of quantum systems are not compensated by the error correction strategy.

On the other hand, when the repetition code is operated under the error correction threshold, i.e., when the fidelity of the physical operations is sufficient, the lifetime of the logical information grows exponentially with the number $d$ of physical data qubits (which is also called the distance $d$ of the repetition code).

On figure 1, only 3 physical data qubits (the data cat qubits 4) and 2 ancilla qubits are shown. However, this figure shows how the various qubits need to be connected on a quantum circuit to be able to perform a phase-flip repetition code.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

In the present invention, by qubit is meant any superconducting circuit implementation of a two-level system or effective two-level system, such as a bosonic qubit encoded in resonators. These bosonic qubits comprise cat qubits.

In the present invention, by cat qubit is meant any implementation of a cat qubit unless stated otherwise, and in particular a two-photon dissipative Schrödinger cat qubit. Alternatively, other cat qubits may be used.

Such cat qubits can be stabilized or confined by the following exemplary schemes:

a) a dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a 4-wave mixing device (typically a Josephson junction or an ATS - asymmetrically threaded superconducting quantum interference device) to the cat qubit mode and by engineering the Hamiltonian $H/\hbar = g_2(a^2-\alpha^2)b^\dagger$ + h. c. where $b$ is the photon annihilation operator of the buffer mode with a pump at frequency $2f_a - f_b$ and a drive on the buffer mode at frequency $f_b$ provided $g_2 < \kappa_b$.

b) a Kerr Hamiltonian $$H/\hbar = \frac{K}{2}(a^{\dagger 2} - \alpha^2)\left(a^2 - \overline{\alpha^2}\right)$$ where K is the complex amplitude of the Kerr Hamiltonian, a is the photon annihilation operator, and $\alpha^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$ , where K is the complex amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + h.c$, where $g_2$ is the complex amplitude of the TPE Hamiltonian, $a$ is the photon annihilation operator, $\alpha$ is a complex number defining the cat qubit, and $\sigma_\pm$ are the lowering and raising operators of the two-level system. This Hamiltonian can be engineered in the same way as the dissipative stabilization a).

e) a dissipative squeezing stabilization with jump operator $L_2 = \sqrt{\kappa_2}\left((cosh(r)a + sinh(r)e^{i\theta}a^\dagger)^2 - (cosh(r)\alpha + sinh(r)e^{i\theta}\overline{\alpha})^2\right)$ where $\kappa_2$ is the two-photon dissipation rate, $a$ is the photon annihilation operator, $\alpha$ is a complex number defining the cat qubit, and $\xi = re^{i\theta}$ is the complex squeezing parameter. This stabilizes "squeezed cat qubits" which are also referred to as displaced squeezed vacuum states. This jump operator can be realized by coupling a lossy buffer mode b with dissipation rate $\kappa_b$, and a 4-wave mixing device (typically a Josephson junction or an ATS) to the cat qubit mode and by engineering the Hamiltonian $H/\hbar = \frac{g_2}{\sqrt{\kappa_2}}L_2 b^\dagger + \mathrm{h.\,c.}$ where $b$ is the photon annihilation operator of mode b with several pumps at frequencies $2f_a - f_b$, $f_b$ and $2f_a + f_b$, and a drive on the buffer mode at frequency $f_b$ provided $g_2 < K_b$.

f) a resonant dissipative stabilization, with jump operator $L_2 = \sqrt{\kappa_2}(a^2 - \alpha^2)$ , where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a 3-wave mixing device to the cat qubit mode a which engineers the Hamiltonian $H/\hbar = g_2(a^2-\alpha^2)b^\dagger + \mathrm{h.\,c.}$ where $b$ is the photon annihilation operator of the buffer mode provided the mode frequencies verify substantially $2f_a = f_b$ and $g_2 < \kappa_b$ to which a drive on the buffer mode at frequency $f_b$ is added.

If the ancilla qubit is a cat qubit, then it can be stabilized by one of the 6 stabilizations described above. For the target cat qubit, in the following the description is limited to the implementation of the stabilization mechanisms a) and e). Indeed, as will appear in the following, the command circuit should be able to turn the target cat qubit stabilization on or off. For the stabilization mechanism a) this can be done by turning off the parametric pump responsible for the 2-to-1 photon conversion. For the stabilization mechanism e), all parametric pumps need to be turned off.

In previous proposals, the theoretical realization of a CNOT gates between a control qubit with annihilation operator $q$ and a stabilized cat qubit with annihilation operator $a$ usually relies on the use of the following three ingredients:

1) the confinement of the control qubit such that a microwave drive at its resonant frequency results in a Rabi oscillation. This is typically native in two-level system qubits and engineered via parametric interactions for cat qubits.

2) the addition in the circuit of a 'CNOT' Hamiltonian or 'longitudinal' Hamiltonian with the formula $H_{CX}/\hbar = g_{CX}(q + q^\dagger)(a^\dagger a - \alpha^2)$ where $g_{CX}$ is the amplitude of the Hamiltonian (it is chosen real without loss of generality). This longitudinal coupling can be seen as a drive on the control qubit (first factor) which amplitude depends on the photon number of the target cat qubit (second factor). For this Hamiltonian to be effective on the target cat qubit, one also needs to turn-off the confinement on the target cat qubit, hence the target cat qubit confinement strength should be controllable.

3) the performance of a conditional confinement on the target cat qubit which depends on the state of the control qubit. For example, in the case of a two-photon dissipative target cat qubit and a control cat qubit with annihilation operator $q$ and same amplitude $\alpha$ as the target cat qubit, this conditional stabilization can be implemented via to the jump operator $L_2(t) = \sqrt{\kappa_2}\left(a^2 - \frac{1}{2}\alpha(q + \alpha) + \frac{1}{2}\alpha e^{\frac{i2\pi}{T}t}(q - \alpha)\right)$ , where $\kappa_2$ is the desired two-photon dissipation rate of the target cat qubit.

Figure 2 shows a generic diagram of a CNOT gate. On the left the quantum circuit representation of a CNOT gate is reminded. On the right, a target cat qubit 4 and a control qubit 6 both controlled via a command circuit 8 are linked so as to perform a CNOT gate 10.

Generally speaking, cat qubits are defined as an effective two-level system that is stabilized within a resonator embedded in a specific superconducting circuit which receives specific radiations controlled by a command circuit. As a result, a cat qubit can be generally designated as a resonator having a specific resonance frequency (which is the frequency of the cat qubit) which is controlled by the command circuit. Each cat qubit can be controlled by a specific command circuit, or a single circuit can be arranged to control all of the cat qubits of a given circuit. In the example described herein, a single command circuit 8 controls the target cat qubits 4 and the control qubit 6. In the following, the terminology cat qubit mode may be used instead of cat qubit resonator to emphasize the fact that cat qubit effectively live in normal modes of the superconducting circuit which may involve several bare resonators typically when those are strongly coupled.

As explained earlier, the dissipative stabilization (scheme a) or e)) of a cat qubit requires to engineer a non-linear conversion between two photons of a first mode that hosts the stabilized quantum manifold, this mode is also called the cat qubit mode *a,* and one photon of a second mode known as buffer mode *b,* and conversely. Such a stabilization scheme allows to suppress bit-flips exponentially with the number of photons in said two coherent states. However, it will be effective only if the confinement rate of said two coherent states is larger than the escape rates induced by the external sources of noise. The confinement rate is directly related to the 2-to-1 photon conversion rate.

First implementations of this stabilization scheme (Leghtas et al., Science 347, 853 (2015) "Confining the state of light to a quantum manifold by engineered two-photon loss*"* and Touzard et al., Physical Review X 8, 021005 (2018) "Coherent Oscillations inside a Quantum Manifold Stabilized by Dissipation") were unsuccessful to observe the exponential suppression of bit-flips because the superconducting circuit element used to engineer the 2-to-1 photon conversion, a so-called transmon, has spurious cross-Kerr terms which induce additional noise processes with escape rates given by the very large transmon-cat qubit dispersive shift. The article *"*Exponential suppression of bit-flips in a qubit encoded in an oscillator ", Lescanne R. et. Al., Nature Physics, 2020 (hereinafter Lescanne 2020) disclosed an improved cat qubit implementation by using an asymmetrically threaded superconducting quantum interference device (also referred to as "ATS") to engineer the 2-to-1 photon conversion. The ATS design has much lower cross-Kerr terms than the transmon, which allowed to observe the exponential suppression of bit-flips. However, a transmon was also used to measure the cat qubit state.

To date, this dissipative stabilization remains the most commonly used scheme for cat qubits, and the use of one or more ATS is the de facto basis of the best performing experimental designs.

In order to improve the experimental realization of CNOT gates, the Applicant has sought to limit as much as possible both the amount of the theoretical CNOT ingredients to engineer as well as the number of parametric pumps and drives and number of non-linear elements. The Applicant also carefully considered the spurious dynamics that results from this engineering and provided solution to limit their negative impact.

The invention showcases two very strong circuit design choices.

The first design choice is that the ATS already present to engineer the two-photon stabilization during the idling period is the only source of non-linearity required to perform the CNOT gate. This choice helps to limit the complexity of the design.

The second design choice is that, although ingredient 3) improves the CNOT fidelity, it is not critical for its implementation. As a result, implementation of ingredient 3) was intendedly avoided. This removes the need for the conditional stabilization and the engineering challenges it requires (direct exchange Hamiltonian between the control qubit and the target cat qubit buffer and two parametric pumps). Even though the data qubits are not stabilized during the CNOT gate, this does not compromise the bit-flip suppression provided the gate is fast compared to the noise or imperfections the stabilization is protecting against such as Kerr effect $H/\hbar = Ka^{\dagger 2}a^2/2$ due to the intrinsic non-linearity

$$L = \sqrt{\kappa_\varphi}\, a^\dagger a$$

of the resonator or dephasing due to the mode frequency fluctuations. If these conditions are met, the two-photon stabilization is effectively turned-on stroboscopically as CNOT gates are interleaved and the noise-bias of the data cat qubit is preserved.

With these two design choices, the CNOT can be performed by solely engineering the longitudinal Hamiltonian with the cat qubit device ATS. Since the stabilization is off when the longitudinal coupling is on, the ATS can be used to engineer both terms (that is the stabilization and the longitudinal coupling) sequentially without risking parametric instabilities which are more susceptible to occur when a single non-linear element is parametrically driven at several frequencies at once.

As a reminder, when biased at its working point the Hamiltonian of the ATS embedded in the cat qubit device has a "sin sin" form

$$H_{ATS} = -2E_J \sin\big(\varphi_\Sigma(t)\big)\sin(\varphi) + \frac{E_L}{2}\big(\varphi - \varphi_\Delta(t)\big)^2$$

where $\varphi = \varphi_a(a + a^\dagger) + \varphi_b(b + b^\dagger)$ is the total superconducting phase difference across the ATS, $\varphi_a$ is the zero-point fluctuation of the phase of the cat qubit mode across the ATS and $\varphi_b$ is the zero-point fluctuation of the phase of the buffer mode across the ATS, $E_J$ is the Josephson energy of a side junction and $E_L$ is the inductive energy of the central inductance, $\varphi_\Sigma(t)$ corresponds a common flux modulation of the 2 loops of the ATS and $\varphi_\Delta(t)$ corresponds to a differential flux modulation of the 2 loops of the ATS. The former can be implemented by sending microwave radiations on the 2 flux lines of the ATS out of phase, the latter can be implemented by sending microwave radiations on the 2 flux lines of the ATS in phase. Parametric pumping of the ATS is typically done by pumping the common flux as pumping the differential flux merely displaces the modes coupled to the ATS. As an example, by pumping the common flux at the frequency $f_p = 2f_a - f_b$, $\varphi_\Sigma(t) = \varepsilon_{2ph}\cos(2\pi f_p t)$ the non-linear part of Hamiltonian writes in the rotating frame

$$H_{ATS} = \frac{E_J \epsilon_{2ph} \varphi_a^2 \varphi_b}{2}(a^2 b^\dagger + \text{h.c.})$$

which is typically the two-to-one photon exchange Hamiltonian needed to engineer the two-photon stabilization.

To engineer the CNOT Hamiltonian between the control qubit and the target cat qubit one needs to:

- couple the control qubit to the ATS such that the phase difference across the ATS writes $\varphi = \varphi_a(a + a^\dagger) + \varphi_b(b + b^\dagger) + \varphi_q(q + q^\dagger)$
- pump the common flux at the control qubit frequency $f_q$, $\varphi_\Sigma(t) = \varepsilon_{CX}\cos(2\pi f_q t)$

In the rotating frame, the parametric part of the Hamiltonian writes

$$H_{ATS} = -E_J \epsilon_{CX} \varphi_q (q + q^\dagger)(1 - \varphi_a^2 a^\dagger a - \varphi_b^2 b^+ b) + E_J \epsilon_{CX} \frac{\varphi_q^3}{2}(q^{\dagger 2} q + q^\dagger q^2)$$

This Hamiltonian can be written to highlight the desired dynamics

$$H_{ATS} = \hbar g_{CX}(q + q^\dagger)(a^\dagger a - \alpha^2) - E_J \epsilon_{CX} \varphi_q (q + q^\dagger)(1 - \varphi_a^2 \alpha^2 - \varphi_b^2 b^+ b)$$
$$+ E_J \epsilon_{CX} \frac{\varphi_q^3}{2}(q^{\dagger 2} q + q^\dagger q^2)$$

with $g_{CX} = E_J \epsilon_{CX} \varphi_q \varphi_a^2 / \hbar$ .

Since the buffer is a lossy mode coupled to a cold environment, one can further assume that $b^\dagger b = 0$, such that the engineered Hamiltonian is

$$H_{ATS} = H_{CX} - E_J \epsilon_{CX} \varphi_q (q + q^\dagger)(1 - \varphi_a^2 \alpha^2) + E_J \epsilon_{CX} \frac{\varphi_q^3}{2}(q^{\dagger 2} q + q^\dagger q^2).$$

This Hamiltonian is close to the CNOT Hamiltonian except for 2 additional terms. The first corresponds to a linear drive with strength $E_J \epsilon_{CX} \varphi_q (1 - \varphi_a^2 \alpha^2) / \hbar$ . This linear drive can readily be compensated by sending a counter drive directly on the control qubit with the correct relative phase and amplitude that can both be tuned experimentally. The applicant also found that the accuracy and scope of the compensation can be greatly increased by pumping the differential flux of the ATS with the correct phase and amplitude which writes, at first order in $\varepsilon_{CX}$,

$$\varphi_\Delta(t) = \frac{2E_J}{E_L} \varphi_\Sigma(t)(1 - \varphi_a^2 \alpha^2)$$ . Although the amplitude and phase of the drive can be computed analytically, it is fine-tuned experimentally by ensuring the control qubit remains undergo no drive in the right circumstances. Experimentally, this compensation is much more appropriate than the counter drive on the control qubit because, it directly compensates the spurious linear drive where it originates from (i.e., at the ATS) and does not only try to compensate its main consequences (i.e., the displacement of the control qubit).

The second term cannot be fully compensated in a simple manner in view of the design choices made for the invention. Instead, the Applicant chose to design the system such that the amplitude of this term is much smaller than the amplitude of the CNOT Hamiltonian. In other words, $E_J \epsilon_{CX} \frac{\varphi_q^3}{2} < E_J \epsilon_{CX} \varphi_q \varphi_a^2$ , which simplifies into

$\varphi_q^2 / 2 \ll \varphi_a^2$ . Although further experimental study is necessary to fully characterize the detrimental impacts of this second term, the Applicant found that $\varphi_q \leq \varphi_a / 2$ is sufficient to be able to neglect them.

Provided these two conditions (compensation and smaller amplitude for the second term) are met, the ATS Hamiltonian $H_{ATS}$ can be engineered such that it is close enough to the perfect CNOT Hamiltonian.

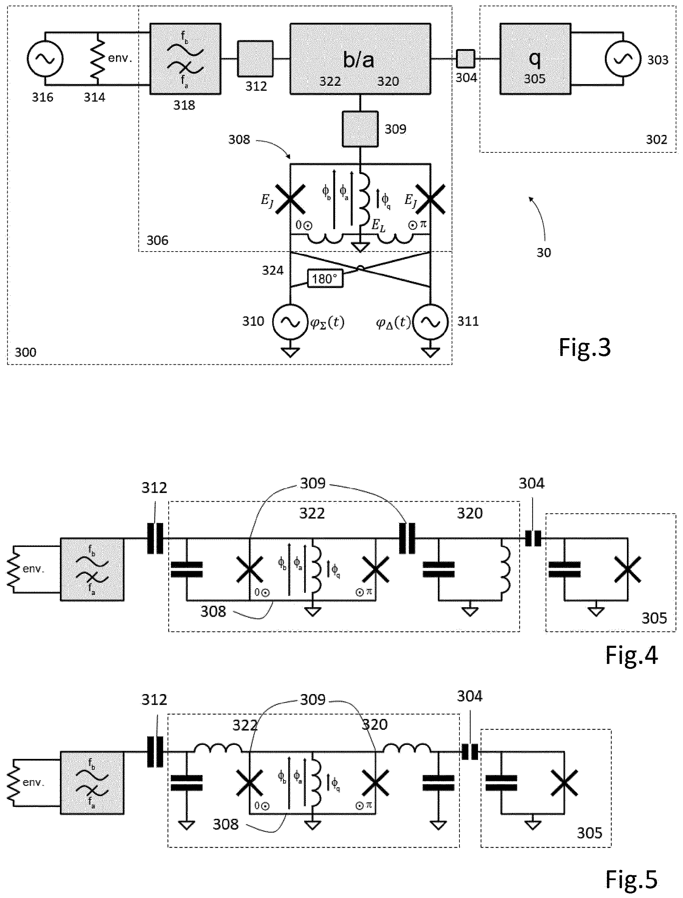

The above design choices resulted in the circuit design shown on figure 3.

The quantum system 30 comprises a target cat qubit device 300 and a control qubit device 302 connected by a linear electromagnetic coupler 304.

In the example described herein, the target cat qubit device 300 comprises a non-linear superconducting circuit 306 to which are connected several microwave sources 310, 311, 316 and a load 314.

The non-linear superconducting circuit 306 comprises a linear microwave network 320-322 such that when coupled via a linear coupler 309 to an ATS 308 which acts as a inductive element the non-linear superconducting circuit comprises at least 2 normal modes (or eigenmodes) a and b at frequency $f_a$ and $f_b$ which participates in the ATS. This participation means that a portion or the entirety of the mode magnetic energy is stored in the ATS. This participation can be quantified by the zero-point fluctuation of the superconducting phase across the ATS, noted $\varphi_a$ for mode a and $\varphi_b$ for mode b. Example of embodiments for the linear microwave network are described further in figures 4 to 7. Among these embodiments, the non-linear superconducting circuit 306 can be a two-mode hybridized system (also known as "galvanic cat", for which the Applicant has filed patent application EP22306815.6 and EP22306816.4) for which two lumped modes couple strongly via the ATS.

When an external DC magnetic field is set such that a 0 mod $2\pi$ magnetic flux threads one of the loop and a $\pi$ mod $2\pi$ (or conversely), we ensure the ATS Hamiltonian has its "sin sin" form. For clarity, the set-up applying the external DC magnetic field is not drawn on figure 3 but can be applied via the 2 bottom mutual inductances of the ATS. A typical implementation consists in interleaving a bias-tee connected to a DC current source to input DC current into the system while letting the microwave radiations go through. The microwave sources 310 and 311 are set-up to modulate respectively the common and differential flux in the ATS which is required to activate parametric interactions. To clearly distinguish the roles of the two sources in the Hamiltonian, a microwave network 324 which applies the correct phase offset is provided in the schematic. Alternatively, each microwave source can be simply coupled to a single node of the ATS and their relative phase and amplitude can be set so as to get the desired flux modulation. In that case, to modulate the common flux the two sources need to address the circuit out of phase and to modulate the differential flux, the two sources need to address the circuit in phase.

When the microwave source 310 is set at the frequency $f_p = | 2f_a - f_b|$, the non-linear superconducting circuit 306 performs the 2-to-1 photon conversion between a first mode a referenced 320 and a second mode b referenced 322. To convert this 2-to-1 photon conversion into two-photon dissipation, the mode b is selectively coupled to the load 314 via a linear coupler 312 and microwave filter 318 configured as a band pass filter with a frequency $f_b$. Alternatively, the filter 318 may be configured as a band stop filter at a frequency $f_a$, and may be placed in between the environment and the two modes to isolate the first mode and thus prevent the first mode from suffering additional losses coming from unwanted coupling to the load 314. Alternatively, it may be configured as a low-pass (respectively high-pass) filter if > $f_b$ (resp $f_b > f_a$). In other embodiments, the microwave filter 318 can be omitted when coupling between the load 314 and substantially only the second mode can be established. Consequently, the man skilled in the art will understand that the first mode a has a high-quality factor, and the second mode b has a low-quality factor.

To perform cat qubit stabilization in mode a, which requires two-photon drive and dissipation, the b mode is eventually driven at its resonant frequency $f_b$. This drive is typically performed by the microwave source 316 set at frequency $f_b$. Alternatively the drive can be performed by the microwave sources 310 or 311 provided they are set-up to supply both frequency $f_p$ and $f_b$. In the following, first mode a hosts a cat qubit, and is also known as the cat qubit mode, whereas second mode b is used as a buffer in between the cat qubit and the environment.

In the above, the elements 310 to 318 and 324 can be seen as part of the command circuit 8 of figure 1. When the CNOT gate is not performed, i.e., in a so-called "idle mode", the command circuit 8 is configured to perform the data cat qubit 4 stabilization exclusively. The control qubit and the configuration required to perform the CNOT gate will now be described.

In the example of figure 3, the control qubit device 302 comprises a mode $q$ 305 with resonant frequency $f_q$ which hosts the control qubit. In various embodiments, the control qubit device 302 can be any superconducting qubit such as a transmon qubit, a flux-qubit or a fluxonium qubit or any bosonic qubit encoded in a resonator such as a Kerr cat qubit (detuned or not), another stabilized cat qubit device (squeezed or not), or a cat qubit confined via a two-photon exchange Hamiltonian.

A described above, the control qubit 305 is coupled to the target cat qubit device 300 via a small linear coupler 304. The linear coupler 304 is arranged such that the control qubit 305 slightly hybridizes with the cat qubit device 300 which leads to a small participation of the control qubit in the cat qubit device ATS 308. This participation is denoted $\varphi_q$. As described above with respect to the second spurious member of the engineered Hamiltonian which is not compensated, the fact that this participation remains small compared to the participation $\varphi_a$ of the target cat qubit mode is critical to accurately implement the CNOT Hamiltonian. In various embodiments, coupler 304 can be capacitive, inductive, galvanic or mediated via a resonating bus coupler or an additional linear microwave network. In the embodiment shown on figure 3, the control qubit device 302 is coupled to the first mode $a$ 320. In other embodiments, control qubit device 302 can be coupled to the second mode $b$ 322. This coupling location is not critical as mode $a$ and $b$ are typically delocalized in the microwave network $a$/$b$ 320-322 and coupling to a specific location does not necessarily mean coupling to a specific mode unless the linear microwave network and the ATS are specifically designed to do so.

The control qubit device 302 also comprises a microwave source 303 which is coupled to the control qubit 305 in order to have the ability to drive it. Microwave source 303 may be used to compensate the linear drive arising from the CNOT Hamiltonian engineering. Microwave source 303 can be seen as part of the command circuit 8 of figure 1.

As explained above, a further limitation on the control qubit device 302 is that the non-linear superconducting circuit 306, the cat qubit mode $a$ participates strongly in the ATS 308 as compared to the control qubit mode 305. When the control qubit mode $q$ participates into the ATS via a small linear coupling with the cat qubit mode $a$ in order to perform the CNOT gate - typically, capacitive coupling with capacitance value small compared to the either mode capacitance, inductive coupling with inductance value small compared to the either mode inductance or coupling mediated by a detuned bus resonator -, this coupling is moderate in general. More precisely, the two coupled modes (here $a$ and $q$, alternatively $b$ and $q$) detuning (i.e., the frequency difference $\Delta = |f_a - f_q|$) also plays a role. Indeed, if the two modes have the same resonant frequency, any slight linear coupling would lead to full hybridization and to $\varphi_a \approx \varphi_q$. However, with typical detunings $\Delta/2\pi$ greater than a few tens of MHz, the participation asymmetry is achieved with standard linear couplings.

Figures 4, 5, 6 and 7 show several possible circuit implementations of the invention of figure 3. The microwave sources have been omitted for simplicity but are arranged in the same way as in figure 3 to run the circuit. The ATS 308 serves as a central reference point to which the rest of the components are connected. The filtering and environment of the buffer mode are also present to this end.

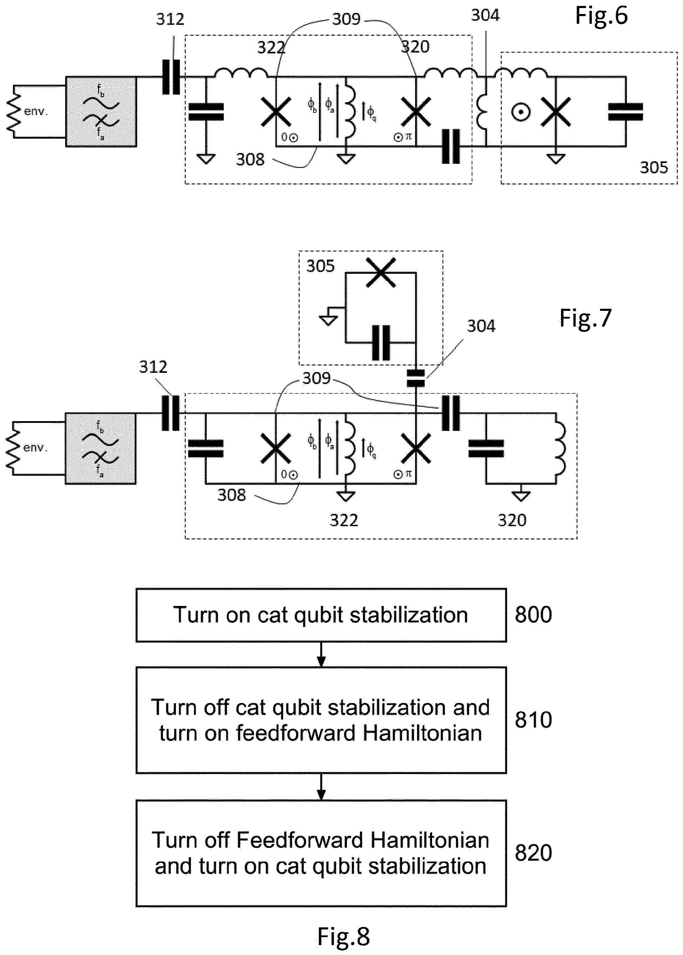

As explained earlier, the weaker coupling of the control qubit $q$ to the ATS 308 (compared to the target cat mode $a$ coupling to the ATS 308) is key. In these figures this weak coupling will be represented by a small linear dipole. However, as explained before, this is typically not sufficient to guarantee the weak coupling as explained above. If the linear coupling is characterized by a strength $g$ as known in the field, then one also needs to ensure the detuning $\Delta$ between the control qubit mode $q$ and the mode it is coupled to ($a$, 320 or $b$, 322) is such that $g < \Delta$. Although this provides design rules, a full microwave simulation or circuit diagonalization of the circuit layout is required to precisely compute the values of $\varphi_a$, $\varphi_b$, $\varphi_q$. This feature helps to ensure that the CNOT gate can be performed accurately and that the circuit uses a single ATS in its elements and that parametric pumping has a single purpose at all times as will be described in the quantum gate diagram of figure 8.

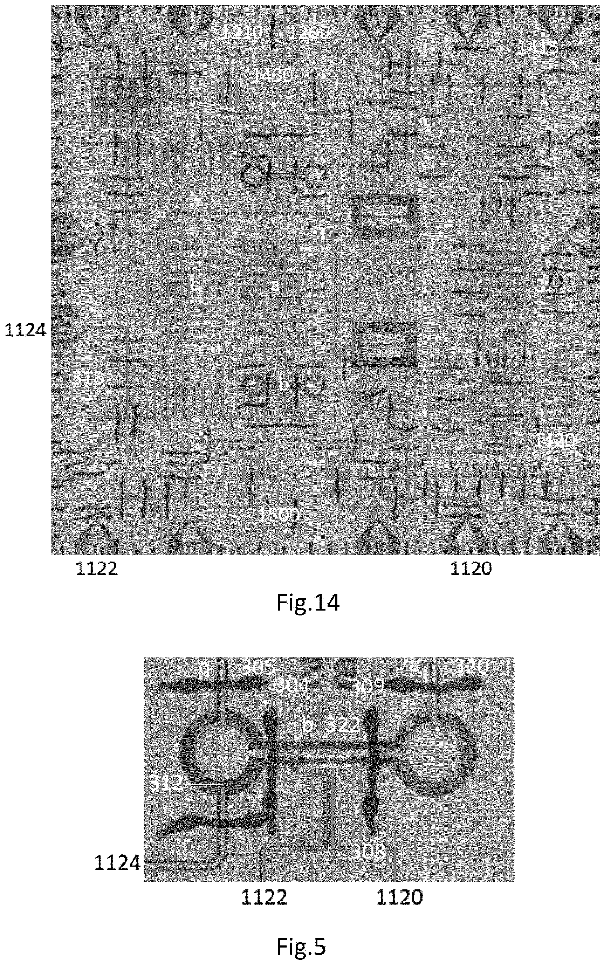

In figure 4, the linear microwave network 320-322 consists of a capacitor galvanically coupled to the ATS 308 to form a buffer mode 322, and a parallel LC resonator 320 strongly capacitively coupled to the ATS 308 to form a cat qubit mode 320. The couplings to the ATS 308 form the linear coupler 309. Both modes $a$ and $b$ are strongly coupled to the ATS 308 as shown by the zero-point fluctuation of the phase of the two modes in central inductance of the ATS 308. The buffer is coupled to the outside world by a capacitance 312. Finally, a transmon qubit 305 comprising a capacitor and a Josephson junction is weakly coupled to the cat qubit mode 320 by a capacitance 304. The weak coupling should be understood as the participation of the transmon qubit mode 305 in the ATS 308 is smaller than that of the cat qubit 320. An experimental implementation of the circuit represented can be found in figure 14 where the control qubit is another dissipative cat qubit.

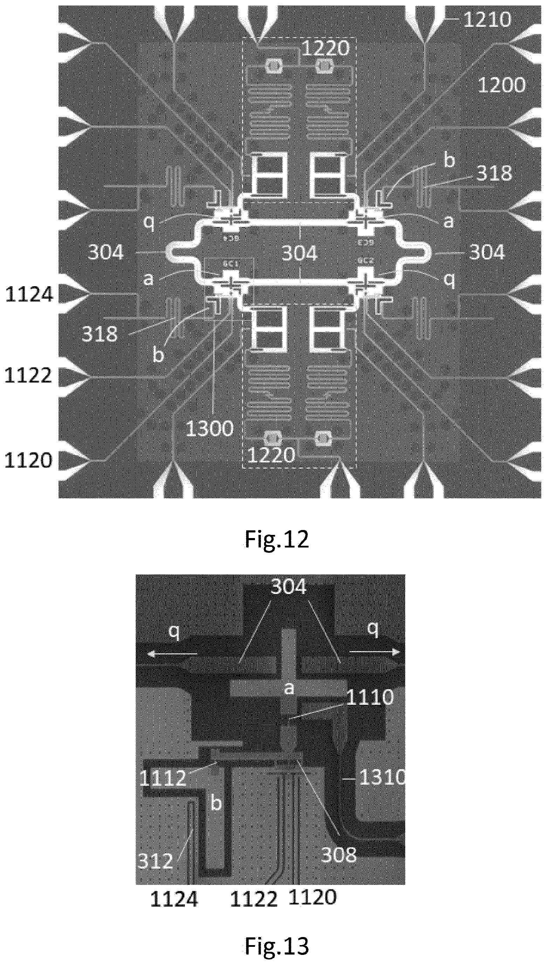

In figure 5, the linear microwave network 320-322 consists of two series LC resonators galvanically coupled to the ATS 308 to form a buffer mode 322 and a cat qubit mode 320. Both modes are strongly coupled to the ATS 308 as shown by the zero-point fluctuation of the phase of the two modes in central inductance of the ATS 308. The buffer is coupled to the outside world by a capacitance 312. Finally, a transmon qubit 305 comprising a capacitor and a Josephson junction is weakly coupled to the cat qubit mode 320 by a capacitance 304. The weak coupling should be understood as the participation of the transmon qubit mode 305 in the ATS 308 is smaller than the one of the cat qubit 320. An experimental implementation of the circuit represented can be found in figure 12 where the control qubit is another dissipative cat qubit.

In figure 6, the linear microwave network 320-322 is identical to the one described in figure 5. However, the control qubit 305 and its coupling are different. In that case, the control qubit 305 consists of a fluxonium qubit comprising a capacitor, a Josephson junction and an inductance (which is typically made out of a chain of Josephson junctions) arranged in a loop through which is threaded a magnetic flux. This control qubit 305 is weakly inductively coupled to the inductance of the series LC resonator defining the cat qubit mode 320 via a shared inductive portion 304. The weak coupling should be understood as the participation of the transmon qubit mode 305 in the ATS 308 is smaller than that of the cat qubit 320.

In figure 7, the linear microwave network 320-322 is identical to the one described in figure 4. However, the control qubit 305 is coupled differently. In that case, the control qubit 305, which consists of transmon qubit comprising a capacitor and a Josephson junction, is weakly coupled by a capacitance 304 to the ATS 308 which also is the buffer mode 322 in that configuration. In this circuit, the cat qubit mode 320 and the control qubit mode 305 have a very similar configuration and mostly the strength of the linear coupling is modified. This figure is provided to emphasize that the weak coupling 304 of figure 3 is a coupling to the linear microwave network 320-322 and not necessarily only to the cat qubit mode 320.

Figure 8 shows a diagram explaining how the quantum gate of figure 3 is executed.

In a first operation 800, which corresponds to the idling operation (the idle mode) of the circuit when the cat qubit only undergoes stabilization, the quantum system 30 does not perform a CNOT operation. In this operation, the target cat qubit device 300 receives two types of radiations, that is the parametric pump from the microwave source 310 at frequency $f_p = 2f_a - f_b$ that modulates the common flux of the ATS to activate 2-to-1 photon non-linear conversion between the cat qubit mode and the buffer mode (in the case of a squeezed cat stabilization, two other parametric pumps are also active as explained above), and the linear drive from the microwave source 316 driving the second mode b 322 at the second resonance frequency $f_b$.

In an operation 810, the quantum system 30 is modified to perform a CNOT operation for a chosen duration. To that end, both radiations from microwave sources 316 and 310 are temporarily turned off such that the data cat qubit stabilization stops. As explained earlier, it is critical that the dynamics of the cat qubit mode are as close as possible to 0 in the frame rotating at frequency $f_a$ such that no bit-flip occurs during the time of the gate. In order to activate the CNOT Hamiltonian, the microwave source 310 is arranged to send radiation at the control qubit frequency $f_q$.

As explained earlier, this has as a first order effect to strongly drive the control qubit $q$ which leads to leakage or unnecessary decoherence of the control qubit $q$. To counteract this effect, a compensation radiation may be turned on with an accurate phase and amplitude (that is fined tuned experimentally while calibrating the CNOT gate in-situ). As the goal of the counter drive is to avoid the displacement of the control qubit, a natural approach is to send it to the control qubit via microwave source 303. While this approach is functional, it is better to tackle the root cause of this displacement by directly counter driving the ATS which is responsible for this displacement in the first place. This can be done by sending radiation at frequency $f_q$ with the microwave source 311 to modulate the differential flux of the ATS with the correct phase and amplitude which has been computed analytically in advance and that can be fine-tuned experimentally in situ.

In an operation 820, after the CNOT Hamiltonian has acted on the system for a duration $T_{CX} = \pi/(4\alpha g_{CX})$, the parametric pump at frequency $f_q$ from the microwave source 310 and its compensation (303 or 311) are turned off. The two-photon stabilization of the data cat qubit can then be resumed by turning back on the microwave source 310 at frequency $f_p$ (and the two other pumps in the case of a squeezed cat) and the microwave source 316 at frequency $f_b$.

As described in figure 8, at any point in time, the ATS 308 is subject to a single parametric pump, that is the two-photon conversion pump during the idling/stabilization time and the longitudinal pump during the CNOT gate. This minimal set-up ensures that the ATS non-linearity performs as close as possible to its theoretical ideal behavior leading to high gate speed and fidelity. In the case where a squeezed data cat qubit is stabilized, the operations 800 and 820 require actually 3 parametric pumps, but all of them are required for a single purpose: stabilizing a squeezed cat state. This is what is herein referred to as a "parametric pumping with a single purpose".

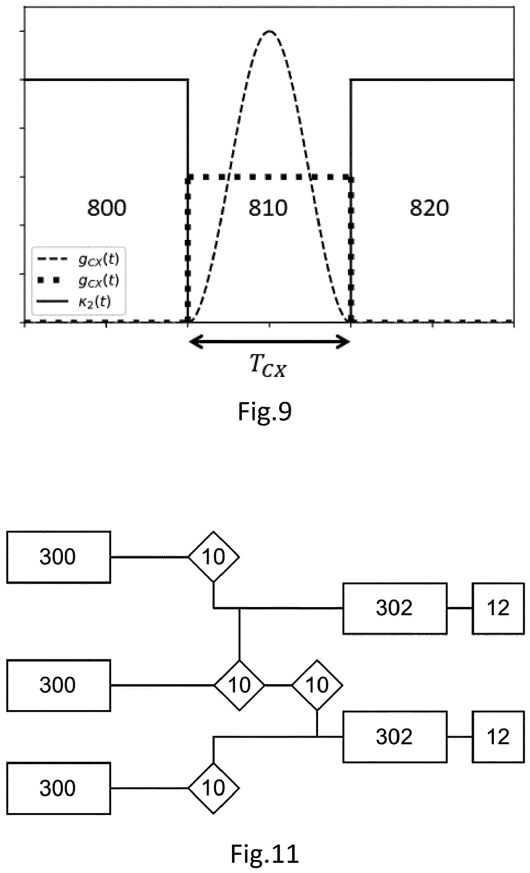

Figure 9 shows exemplary signal timings for operations 800, 810 and 820. During idle mode, the data cat qubit is stabilized with two-photon dissipation $\kappa_2$. When the gate starts, this dissipation is turned off such that the CNOT Hamiltonian can be effective. Finally, after a time $T_{CX} = \pi/(4\alpha g_{CX})$ the CNOT Hamiltonian is turned off and the two-photon dissipation is turned back on again. At no point in time does the ATS serve two purposes at once, which guarantees experimental robustness. The limitations for the CNOT pulse strength and shape (dotted or dashed lines) will now be explained.

As explained above, the CNOT Hamiltonian effectively acts as a linear drive on the control qubit $q$ which strength depends on the number of photons in the target cat qubit $a$. The nature of the control qubit $q$ sets upper bounds on the maximal effective drive strength $g_{CX}\alpha$. There exist two cases. In the first case, the control qubit $q$ is defined by a real or Hamiltonian gap - for a two-level system this gap is the anharmonicity $|\omega_{12} - \omega_q|$ where $\omega_q$ is the qubit frequency or the frequency of ground to first excited state transition and $\omega_{12}$ is the frequency of first excited to second excited state transition. In that case, the adiabatic theorem applies and states that the qubit stays exponentially confined despite the action of the effective drive provided $g_{CX}\alpha < |\omega_{12} - \omega_q|$. If the ancilla qubit is a cat qubit with amplitude $\alpha_c$ confined by a Kerr Hamiltonian (b) the condition writes $g_{CX}\alpha < K\alpha_c^2$. If it is confined by a detuned Kerr Hamiltonian (c) the condition writes $g_{CX}\alpha < K(\alpha_c^2 + \sqrt{\Delta})$. Finally, it is confined by a TPE Hamiltonian (d), the condition writes $g_{CX}\alpha < \alpha_c g_2$. In the second case, the control qubit $q$ is defined by an imaginary gap or equivalently is stabilized by dissipation. In that case, the adiabatic theorem does not apply and the gate strength has to be much smaller than the imaginary gap in order to avoid undesired decoherence of the ancilla qubit during the gate. In practice, for an ancilla cat qubit stabilized by two-photon dissipation with rate $\kappa_2$ (a) the condition writes $g_{CX}\alpha \ll \kappa_2\alpha_c^2$. For a squeezed ancilla cat qubit (e), the condition writes $g_{CX}\alpha \ll \kappa_2\alpha_c^2 e^{2r}$ where $r$ is the squeezing parameter.

On top of the gate strength requirement, the nature of the control qubit confinement sets constraints on how the gate should be applied. In the case of a dissipative ancilla qubit, the CNOT Hamiltonian can be turned on instantaneously as shown by the dashed lines of figure 9 as soon as the data cat qubit confinement is turned off (solid line $\kappa_2(t)$). In the case of a Hamiltonian ancilla qubit, the CNOT Hamiltonian should be turned on smoothly such that the spectral content of the pulse $g_{CX}(t)$ (dotted lines) does not contain frequency components above the gap. Typically, a gaussian pulse can be used. On figure 9, a cosine shape is used for its finite temporal envelope. In the case of a time dependent $g_{CX}$, the pulse amplitude should be such that $\int 4\alpha g_{CX}(t)dt = \pi$.

Figure 10 shows a schematic diagram of a quantum system for performing a repetition code using the quantum gate of the invention.

The quantum system of figure 10 presents a classical repetition code architecture for cat qubits: a number d greater than or equal to 3 of data cat qubits 300 and a number d-1 of ancilla qubits 302. In certain modes of realization, such as a circular repetition code, it is also possible to have d ancilla qubits 302 for d data cat qubits 300. Each ancilla qubit 302 is linked by a CNOT gate 10 to two data cat qubits 300. The links between the data cat qubits 4 and ancilla qubits 302 are such that a data cat qubit 300 is connected to at most two ancilla qubits 302. Each ancilla qubit 302 is also connected to a measuring device that measures the X Pauli operator of the number of photons 12, which is used to detect phase errors once the cycle of the error repetition code has been implemented.

As explained in the introduction, the implementation of the repetition code is as follows:

- the preparation in the state $|+\rangle$ or $|-\rangle$, which are the eigenstates of the Pauli *X* operator, for each ancilla cat qubit 302,
- each CNOT gate 10 is applied so that the ancilla cat qubit 302 state is modified according to error syndrome of the data cat qubit 300 to which it is connected by the two respective CNOT gate 10, and
- the measurement of the X operator is carried out for each ancilla qubit 302.

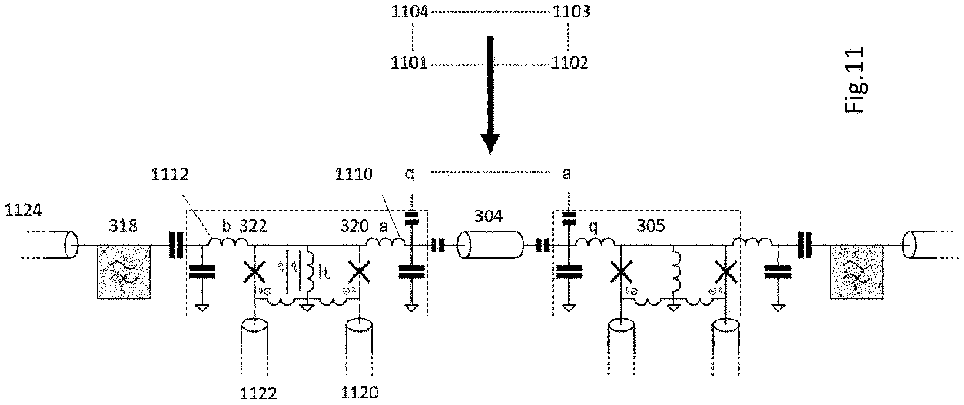

Figures 11, 12 and 13 depict a practical implementation of the invention. In this implementation 4 dissipative cat qubits 1101, 1102, 1103 and 1104 with similar parameters (except for their frequencies which are slightly detuned from one another in order to selectively address each mode with the radiation and not having the modes delocalized over the entire circuit) are laid on a superconducting chip in circular pattern with nearest neighbor connection. When operating the chip, some cat qubits are chosen to act as data cat qubits "a" and some are chosen to act as ancilla cat qubits "q". This chip can operate an error correction experiment with a distance $d$ = 2, (strictly speaking only error detection can be performed because at $d$ = 2 errors can only be detected and not located). This error detection experiment requires $d$ data qubits and $d$ - 1 ancilla qubits, hence requires 3 qubits. On this chip, there are 4 cat qubits to be able to choose a posteriori the best 3 cat qubits to run the error detection experiment. For example, if the qubits 1101, 1102 and 1103 have the best coherence times of the chip, 1101 and 1103 are chosen as data qubits and 1102 is chosen as an ancilla qubit. Alternatively, 1102, 1103, 1104 are the best qubits of the chip, 1102 and 1104 are chosen as data qubits and 1103 is chosen as an ancilla qubit. The fact that all qubits have the same nature enables this flexibility. If data and ancilla where different, only the choice of the ancilla qubit would be possible.

Figure 11 depicts a partial schematic version of the practical implementation. In this schematic, the choice has been made to make 1101 and 1103 the two data cat qubits and 1102 or 1104 the ancilla cat qubit for readability, hence the labels "a" and "q". Both the data and the ancilla cat qubits are dissipative cat qubits. The circuit representation is similar to figure 5 (except for the control qubit) with a capacitive bus coupling 304 between the data 1101 and the ancilla 1102 qubit modes. The microwave radiation sources are not represented but the CPW (co-planar waveguide) transmission lines that connect the circuit to the outside rest of the quantum system are represented 1120, 1122, 1124. The lines 1120, 1122 are responsible for the DC current bias and the parametric flux modulation of the ATS 308, the first one addressing mostly the right loop and the second one addressing mostly le left loop. By pumping any linear combination of both, the control circuit can pump $\varphi_\Sigma$ or $\varphi_\Delta$. The line 1124 is connecting the buffer to a 50$\Omega$ environment to enable losses and drive. The ancilla qubit 1102 have the same input transmission lines.

Figure 12 shows an optical micrograph of a chip comprising 4 cat qubit as described in figure 11. This chip consists of a superconducting layer 1200 (grey area) deposited on a dielectric (sapphire) substrate 1210, the white color represents parts where the superconducting layer has been removed and the substrate is visible. The lighter grey area also corresponds to the superconducting layer 1210 where small holes are regularly present in the superconducting layer to trap vortices caused by stray magnetic fields. The lithography pattern corresponds to the circuit representation described in figure 11. In particular, the busses have been coupled by capacitances 304 which correspond to portions of CPW lines. The filtering of the buffer mode is done via a $\lambda/4$ stub filter 318, a pass-band filter at the buffer mode frequency, capacitively coupled to the buffer and galvanically coupled to the input line (e.g., 1124). The sub-regions 1220 are not shown in the circuit representation of figure 11 They correspond to a standard arrangement known in the field comprising 2 transmon qubits capacitively coupled to 2 readout resonators, filtered by 2 Purcell filters capacitively coupled to a single input line. This arrangement is coupled to the cat qubit mode in order to perform the Wigner tomography of the cat qubit as known in the field.

Figure 13 is a zoom on the dotted region 1300 of figure 12 corresponding to the data qubit 1101. This corresponds to a typical stabilized data qubit device (which for the implementation of figure 12 is also used to stand as ancilla qubit figure 13). The elements of the circuit representation of figure 11 can readily be recognized, in particular the lumped inductances 1110 and 1112 which are made out Josephson junction arrays. The capacitively coupled bus 1310 couples the cat qubit mode to the transmon qubit used for its tomography.

In order to give typical numbers, in this device the zero-point fluctuations of the phase across the ATS 308 are simulated to be $\varphi_a$ = 0.136 for the cat qubit mode of this cell, $\varphi_b$ = 0.186 for the buffer mode of this cell and $\varphi_q$ = 0.019 for the cat qubit mode of 1102 which serves as an ancilla qubit in this configuration. The zero-point fluctuations of the phase of the cat qubit mode of 1104 is as well $$\varphi_q' = 0.018$$ since the data cat qubit 1101 is also coupled to ancilla qubit 1104 to perform the other CNOT gate. These numbers verify the constraint $\varphi_q \leq \varphi_a/2$ which ensures small parasitic terms for the CNOT Hamiltonian engineering.

Figure 14 represents an optical micrograph of a chip corresponding to another embodiment of the invention. This chip is arranged in a similar way as the equivalent circuit represented in figure 7 except the control qubit is another stabilized cat qubit. This chip consists of a superconducting layer 1200 (grey area) deposited on a dielectric (sapphire) substrate 1210, the darker gray color represents parts where the superconducting layer has been removed and the substrate is visible. Wire bonds 1415 are visible and used to equilibrate the electric potential across the chip despite the circuit pattern and to connect the chip to the rest of the circuit. The chip comprises a target cat qubit device a/b where the $b$ mode consists of an ATS capacitively shunted to ground (1500, see figure 15) which is capacitively coupled to a $\lambda/2$ CPW resonator which acts as the cat qubit mode a. The buffer mode is made dissipative by capacitive coupling to an input drive line 1124 via a $\lambda/4$ stub filter 318, a pass-band filter at the buffer mode frequency, similarly to figure 12. The control qubit consists of another stabilized cat qubit device where the cat qubit mode $q$ consists of another $\lambda/2$ CPW resonator coupled to its own buffer mode in a similar way. The two cat qubits are coupled to a tomography system 1420 comprising transmon qubits and readout resonators, as in figure 12. On this chip the bias-tee 1430 mentioned in reference to figure 3 is also represented to input DC current on the RF flux lines (e.g., 1122 and 1120) and bias the ATS at its DC working point.

Figure 15 is a zoom on the dotted region 1500 of figure 14 corresponding to the buffer mode of the data cat qubit device. The elements of the circuit representation of figure 4 can readily be recognized (except for the control qubit), in particular the ATS 308 to which is directly a coupled a capacitance to ground to form the buffer mode $b$ 322 and to which the cat qubit mode $a$ 320 is capacitively coupled 309. The buffer mode is capacitively coupled to the environment via the drive line 1124 with the capacitor 312. The control qubit $q$ 305 is finally capacitively coupled to the buffer mode via the capacitance 304 in order to participate into the ATS. The capacitor 304 is only slightly smaller than the capacitance 309 both in dimension and value. Eventually, the smaller participation of the control qubit $q$ into the ATS, compared to the one of the cat qubit mode $a$, is ensured by having a greater detuning between $q$ and $b$ than between $a$ and $b$. As an illustration, here are the frequencies and zero-point fluctuations of the phase in this device : $f_a$ = 4.82 GHz, $f_b$ = 5.38 GHz, $f_q$ = 4.46 GHz ; $\varphi_a$ = 0.062, $\varphi_b$ = 0.23, $\varphi_q$ = 0.032. In this device $\varphi_q \approx \varphi_a/2$ which is enough to implement the CNOT Hamiltonian.

**Claims**

1.  Quantum system for performing a CNOT gate comprising:

    - a command circuit (8) for providing microwave radiation,
    - a target cat qubit device (4) comprising an asymmetrically threaded superconducting quantum interference device (308) having flux lines through which radiation can be sent to modulate a common flux and/or a differential flux, and connected to at least one resonant portion (320-322),
    said target cat qubit device (300) having a first mode (a) with a first resonant frequency and a second mode (b) with a second resonant frequency,
    and said asymmetrically threaded superconducting quantum interference device (308) being arranged such that when said command circuit (8) delivers a radiation having said second resonant frequency to said a least one resonant portion (320-322) to drive said second mode (b) and delivers radiation in said flux lines to modulate said common flux at a frequency equal to the absolute value of the difference between twice the first resonant frequency and the second resonant frequency, the target cat qubit device (4) stabilizes a target cat qubit having said first resonant frequency, and

    - a control superconducting qubit device (6) having a third mode (q) with a third resonant frequency for hosting a control qubit (305) arranged such that a Rabi oscillation of the third mode (q) is induced when it is subject to a radiation having said third resonant frequency with a strength which is less than the control qubit confinement rate, said control superconducting qubit device (6) being linearly coupled to said target cat qubit device (4) such that said third mode (q) is linearly coupled with said asymmetrically threaded superconducting quantum interference device (308),

    said command circuit (8) being arranged during a CNOT gate time window to deliver in said flux lines only a radiation at a frequency equal to the third resonant frequency to operate a CNOT gate (10) between said target cat qubit and said control qubit, and arranged outside of said CNOT gate time window to deliver a radiation having said second resonant frequency to said a least one resonant portion (320-322) to drive said second mode (b) and to deliver radiation in said flux lines to modulate said common flux at a frequency equal to the absolute value of the difference between twice the first resonant frequency and the second resonant frequency.

2.  Quantum system according to claim 1, wherein said target cat qubit device (4) and said control superconducting device (6) are linearly coupled in such a way that the phase difference across said asymmetrically threaded superconducting quantum interference device (308) writes $\varphi = \varphi_a(a + a^\dagger) + \varphi_b(b + b^\dagger) + \varphi_q(q + q^\dagger)$ with $a$ being the photon annihilation operator of said first mode (a), $\varphi_a$ being the zero-point fluctuation of the phase of said first mode (a) across said asymmetrically threaded superconducting quantum interference device (308), $b$ being the photon annihilation operator of said second mode (b), $\varphi_b$ being the zero-point fluctuation of the phase of said second mode (b) across said asymmetrically threaded superconducting quantum interference device (308), $q$ being the photon annihilation operator of said third mode (q), $\varphi_q$ being the zero-point fluctuation of the phase of said third mode (q) across said asymmetrically threaded superconducting quantum interference device (308), and $\varphi_q \leq \varphi_a/2$.

3.  Quantum system according to claim 1 or 2, wherein said command circuit (8) is arranged to pump said flux lines with only a radiation at a frequency equal to the third resonant frequency during a CNOT gate time window with an amplitude $\varepsilon_{CX}$, which induces a Hamiltonian having the formula

$$H_{ATS} = H_{CX} - E_J \epsilon_{CX} \varphi_q (q + q^\dagger)(1 - \varphi_a^2 \alpha^2) + E_J \epsilon_{CX} \frac{\varphi_q^3}{2}(q^{\dagger 2} q + q^\dagger q^2)$$ where $H_{CX}$ is a CNOT Hamiltonian with the formula $H_{CX} = \hbar g_{cX}(q + q^\dagger)(a^\dagger a - \alpha^2)$ and $g_{CX} = E_J \epsilon_{CX} \varphi_q \varphi_a^2/\hbar$, $a$ is the photon annihilation operator of said first mode (a), $\varphi_a$ is the zero-point fluctuation of the phase of said first mode (a) across said asymmetrically threaded superconducting quantum interference device (308), $q$ is the photon annihilation operator of said third mode (q), $\varphi_q$ is the zero-point fluctuation of the phase of said third mode (q) across said asymmetrically threaded superconducting quantum interference device (308), $E_J$ is the Josephson energy of the side junctions of the asymmetrically threaded superconducting quantum interference device (308), and $\alpha^2$ is the photon number of said first mode (a), said command circuit (8) being further arranged to induce a compensation Hamiltonian having the formula $H_{Cmp} = E_J \epsilon_{CX} \varphi_q (q + q^\dagger)(1 - \varphi_a^2 \alpha^2)$ during said CNOT gate time window.

4. Quantum system according to claim 3, wherein said command circuit (8) is arranged to induce a compensation Hamiltonian having the formula $H_{Cmp} = E_J \varepsilon_{CX} \varphi_q (q +$

$q^\dagger)(1 - \varphi_a^2 \alpha^2)$ during said CNOT gate time window by delivering in said flux lines only a radiation at a frequency equal to the third resonant frequency to modulate said differential flux $\varphi_\Delta$ substantially having the formula

$\varphi_\Delta(t) = \frac{2E_J}{E_L} \varphi_\Sigma(t)(1 - \varphi_a^2 \alpha^2)$ where $\varphi_\Sigma$ is the common flux and $E_L$ is the inductive energy of the central inductance of the asymmetrically threaded superconducting quantum interference device (308).

5. Quantum system according to claim 3, wherein said command circuit (8) is arranged to induce a compensation Hamiltonian having the formula $H_{Cmp} = E_J \varepsilon_{CX} \varphi_q (q + q^\dagger)(1 - \varphi_a^2 \alpha^2)$ during said CNOT gate time window by delivering radiation at a frequency equal to the third resonant frequency to said control qubit device (305).

6. Quantum system according to one of the preceding claims, wherein said control superconducting qubit device (6) hosts a transmon qubit, a flux-qubit, a fluxonium qubit, a cat qubit or any bosonic qubit encoded in a resonator.

7. Quantum system according to one of the preceding claims, wherein said asymmetrically threaded superconducting quantum interference device (308) is further arranged such that when said command circuit (8) delivers a radiation having said second resonant frequency to drive said second mode (b) and delivers radiation in said flux lines to modulate said common flux at frequencies equal to the absolute value of the difference between twice the first resonant frequency and the second resonant frequency, the second resonant frequency and the sum of twice the first resonant frequency and the second resonant frequency, the target cat qubit device (4) stabilizes a target squeezed cat qubit having said first resonant frequency.

8. Quantum system according to any of the preceding claims, wherein said target cat qubit device (4) and said control superconducting qubit device (6) are arranged such that the absolute difference between said first resonant frequency and said third resonant frequency exceeds 10MHz.

9. Quantum system according to any of the preceding claims, wherein said command circuit (8) is arranged to deliver radiation in said flux lines to modulate said common flux with only a radiation at a frequency equal to the third resonant frequency to induce a CNOT Hamiltonian with a constant strength $g_{CX}$.

10. Quantum system according to any of the claims 1 to 8, wherein said command circuit (8) is arranged to deliver radiation in said flux lines to modulate said common flux with only a radiation at a frequency equal to the third resonant frequency to induce a CNOT Hamiltonian with a time dependent strength $g_{CX}(t)$ such that $\int 4\alpha g_{CX}(t)dt = \pi$.

11. Quantum system for performing a repetition code comprising a command circuit (8) for selectively applying microwave radiation, a number d of data cat qubit devices (4), with d equal to or greater than two, each data cat qubit device (4) having a respective resonance frequency and being coupled to said command circuit (8) for stabilizing a respective data cat qubit, and a number d-1 of ancilla qubit devices (6), each ancilla qubit device having an ancilla resonance frequency coupled to said command circuit (8) for hosting an ancilla qubit, each of said d-1 ancilla qubit devices being linearly coupled to two respective data cat qubit devices of said d data cat qubit devices, and each data cat qubit device of said d data cat qubit device being connected at most to two ancilla qubit devices of said d-1 ancilla qubit devices, said d data cat qubit devices (4) and said d-1 ancilla qubit devices (6) being such that each coupling of a data cat qubit device (4) with an ancilla qubit device (6) can be controlled by said command circuit (8) to realize a quantum system according to one of the preceding claims, said command circuit (8) being further arranged to perform d-1 quantum operations by:

   1) for each ancilla qubit device of said d-1 ancilla qubit devices, preparing an ancilla qubit in said each of said ancilla qubit device of said d-1 ancilla qubit devices with a state "1+>" or "|->" of the X operator,

2) for each ancilla qubit device of said d-1 ancilla qubit devices, performing a CNOT gate with a first one of the two data cat qubit devices to which it is coupled, and thereafter performing a CNOT gate with the second of the two data cat qubit devices to which it is coupled,

3) applying a measurement on operator X on said each ancilla qubit device.

12. Quantum system according to claim 11, wherein all ancilla qubit devices host cat qubits such that all data cat qubit devices and all ancilla qubit devices are cat qubit devices, and wherein said command circuit (8) defines which cat qubit device is a data cat qubit device (4) and which cat qubit device is an ancilla qubit device (6).

Fig.1

Fig.2

Fig.3

Fig.4

Fig.5

Fig.6

312    309    304    Fig.6

322    320

308    305

305    Fig.7

304

312    309

308

322    320

| Turn on cat qubit stabilization | 800 |

| Turn off cat qubit stabilization and turn on feedforward Hamiltonian | 810 |

| Turn off Feedforward Hamiltonian and turn on cat qubit stabilization | 820 |

Fig.8

Fig.9

Fig.11

Fig.11

Fig.12

Fig.13

Fig.14

Fig.5

| | Europäisches Patentamt European Patent Office Office européen des brevets | **EUROPEAN SEARCH REPORT** | **Application Number** EP 23 30 5298 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JEREMIE GUILLAUD ET AL: "Repetition Cat Qubits for Fault-Tolerant Quantum Computation", ARXIV.ORG, CORNELL UNIVERSITY LIBRARY, 201 OLIN LIBRARY CORNELL UNIVERSITY ITHACA, NY 14853, 20 April 2019 (2019-04-20), XP081557716, DOI: 10.1103/PHYSREVX.9.041053 * the whole document * | 1-12 | INV. G06N10/40 G06N10/70 |
| A,D | RONAN GAUTIER ET AL: "Combined Dissipative and Hamiltonian Confinement of Cat Qubits", ARXIV.ORG, CORNELL UNIVERSITY LIBRARY, 201 OLIN LIBRARY CORNELL UNIVERSITY ITHACA, NY 14853, 1 April 2022 (2022-04-01), XP091195780, * the whole document * | 1-12 | |
| A | RONAN GAUTIER ET AL: "Designing High-Fidelity Gates for Dissipative Cat Qubits", ARXIV.ORG, CORNELL UNIVERSITY LIBRARY, 201 OLIN LIBRARY CORNELL UNIVERSITY ITHACA, NY 14853, 1 March 2023 (2023-03-01), XP091456473, * the whole document * | 1-12 | TECHNICAL FIELDS SEARCHED (IPC) G06N |
| A | PURI SHRUTI ET AL: "Bias-preserving gates with stabilized cat qubits", SCIENCE ADVANCES, vol. 6, no. 34, 21 August 2020 (2020-08-21), XP093066564, DOI: 10.1126/sciadv.aay5901 * the whole document * | 1-12 | |

-/--

The present search report has been drawn up for all claims

| Place of search | Date of completion of the search | Examiner |
|---|---|---|
| The Hague | 2 August 2023 | Moro Pérez, Gonzalo |

Europäisches
Patentamt

European
Patent Office

Office européen
des brevets

## EUROPEAN SEARCH REPORT

Application Number

EP 23 30 5298

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SERGE ROSENBLUM ET AL: "A CNOT gate between multiphoton qubits encoded in two cavities",<br>ARXIV.ORG, CORNELL UNIVERSITY LIBRARY, 201 OLIN LIBRARY CORNELL UNIVERSITY ITHACA, NY 14853,<br>16 September 2017 (2017-09-16),<br>XP081302077,<br>DOI: 10.1038/S41467-018-03059-5<br>* the whole document * | 1-12 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 2 August 2023 | Moro Pérez, Gonzalo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 22306815

- EP 22306816

### Non-patent literature cited in the description

- **GUILLAUD et al.** Repetition Cat Qubits for Fault-Tolerant Quantum Computation. *Phys. Rev. X,* vol. 9, 041053, https://doi.org/10.1103/PhysRevX.9.041053
- **CHAMBERLAND et al.** Building a Fault-Tolerant Quantum Computer Using Concatenated Cat Codes. *PRX Quantum,* vol. 3, 010329, https://doi.org/10.1103/PRXQuantum.3.010329
- **GAUTIER et al.** Combined Dissipative and Hamiltonian Confinement of Cat Qubits. *PRX Quantum,* vol. 3, 020339, https://doi.org/10.1103/PRXQuantum.3.0203 3 9

- **LEGHTAS et al.** Confining the state of light to a quantum manifold by engineered two-photon loss. *Science,* 2015, vol. 347, 853
- **TOUZARD et al.** Coherent Oscillations inside a Quantum Manifold Stabilized by Dissipation. *Physical Review X,* 2018, vol. 8, 021005
- **LESCANNE R.** Exponential suppression of bit-flips in a qubit encoded in an oscillator. *Nature Physics,* 2020